# EUROPEAN PATENT SPECIFICATION

(11) **EP 1 845 827 B1**
(45) Date of publication and mention of the grant of the patent: **13.08.2008**
(21) Application number: 04804980.3
(22) Date of filing: 21.12.2004
(51) Int. Cl.: A47J 31/06

(54) **APPARATUS FOR PREPARING A BEVERAGE**
VORRICHTUNG ZUR ZUBEREITUNG EINES GETRÄNKS
APPAREIL DE PREPARATION D'UNE BOISSON

(43) Date of publication of application: 24.10.2007
(73) Proprietor: Inventum Holding B.V., 3903 LH Veenendaal (NL); Electrical and Electronics Limited, Tai Po, N.T., Hong Kong (CN); Coval Art Tec Limited, Limassol, P.C. 3106 (CY)
(72) Inventor: WEIJERS, Marcel, Hendrikus, Simon, NL-7908 LH Hoogeveen (NL); CHENG PUI YIN, Amy, Decem, Tai Po, N.T., Hong Kong (CN)
(74) Representative: van Looijengoed, Ferry Antoin Theodorus
(86) International application number: PCT/EP2004/053646
(87) International publication number: WO 2006/066625

(56) References cited:
- EP-A- 0 904 717
- WO-A-20/04023948
- FR-A- 2 842 090
- FR-A- 2 842 092
- US-A- 5 287 797

## Description

The invention relates to an apparatus for preparing a beverage according to the preamble of claim 1.

EP-A-0 904 717 discloses a holder with an inner space for a pill-shaped pouch, manufactured from filter paper and filled with ground coffee, that rests on the bottom of and extends over the bottom to a position adjacent an outside vertical sidewall of the inner space.

FR 2 842 090 and FR 2 842 892 disclose a coffee machine with a holder capable of accommodating two pads of different dimensions next to each other. To that end, the holder 11 defines two spaces separated by an intermediate wall.

A problem associated with the prior art holder is that it is not suitable for pouches or containers of different diameters that are available on the market. Containers with dimensions different from those envisaged by the manufacturer of the holder will not accurately fit in the holder and may result in bypass of water. Further, if the container is not sufficiently supported, the container may be damaged during operation resulting in undesired release of the ground coffee.

It is an object of the present invention to provide an apparatus for preparing a beverage with a holder that allows use of containers of different dimensions.

This object is accomplished by an apparatus for preparing a beverage according to the characterizing portion of claim 1.

By providing multiple holding structures, e.g. support structures designed as terraces, in the inner space of the holder, containers of different dimensions fit into the holder. Accordingly, chances of bypass of water and damage of the container are reduced when using the same holder for containers of different size. The flexible nature of the closure member ensures that the brewing chamber is adapted completely to the present container. The container is pressed against the appropriate holding structure by the closure member to prevent bypassing of water and force the water through the container. The holding structures are preferably such that they guide the container to a central position before it contacts the closure member.

The embodiment of the invention as defined in claims 2 and 3 has the advantage that, since the containers typically have a circular shape with a radius between 44 and' 62 millimetres, such a holder is adapted for commercially available containers filled with the soluble or extractable product.

The embodiment of the invention as defined in claims 4 and 5 has the advantage that the spacer structures defined on the central surface determine the extraction area, i.e. the area where the beverage is collected for further passing to another component (e.g. a frothing device) or direct delivery in a cup.

The embodiment of the invention as defined in claim 6 has the advantage that an appropriate space is provided for the frothing device.

The embodiment of the invention as defined in claims 7 and 8 has the advantage that removal of the container after brewing is facilitated. In the prior art holder, vacuum suction may result in difficulties in removing the container. It should be appreciated that the height of these ribs should preferably be limited, e.g. less than 0.2 millimetre, to prevent bypass of water.

According to an embodiment of the invention, water is provided to the container by a valve system as defined in claim 9.

The invention will be further illustrated with reference to the attached drawings, which schematically show preferred embodiments according to the invention. It will be understood that the invention is not in any way restricted to these specific and preferred embodiments.

In the drawings:
Fig. 1 is a schematic illustration of an apparatus according to an embodiment of the invention;
Figs. 2 and 3 depict a holder in perspective view and in cross-section according to an embodiment of the invention;
Fig. 4A-4J show various combinations of holders and containers, and
Figs. 5A and 5B display the holder in combination with a cover member of an apparatus in combination with an embodiment of the invention.

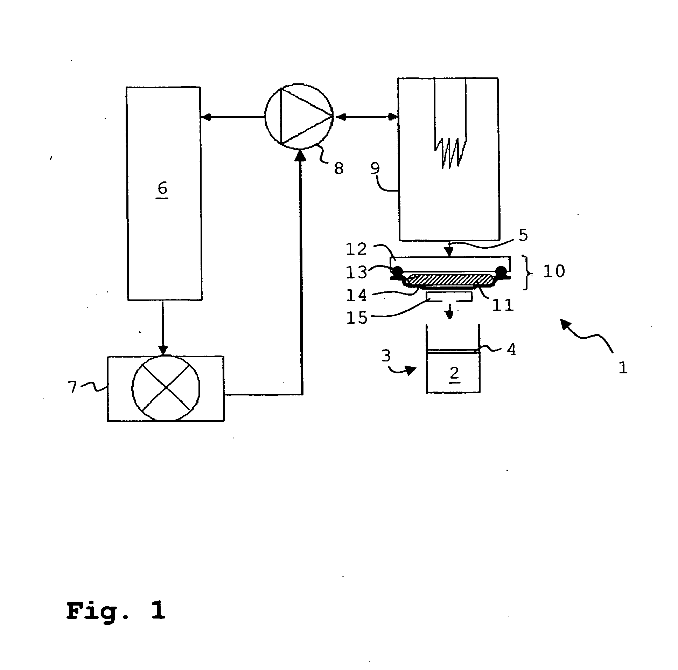

Fig. 1 is a schematic illustration of an apparatus 1 for preparing a beverage 2 suitable for consumption in a cup 3 with a fine-bubble froth layer 4. The apparatus 1 is capable of producing beverages 2, such as coffee, tea, chocolate or cappuccino, in a predetermined volume, typically one or two cups. The apparatus comprises a liquid inlet 5, a water container 6 for fresh water for the preparation of the beverage 2, a pump 7, a valve system 8 and a heating device 9, such as a boiler, from which heated water is provided into a brew chamber 10. The brew chamber 10 involves the volume available for a container 11 with a filter, also referred to as pad, pod or pouch, pre-packed with a soluble or extractable product to obtain the brewed beverage 2 after the pressurized liquid has passed through the product. The brew chamber 10 has a cover member 12, a closing seal 13 and a holder 14 enclosing the container 11. The apparatus 1 has a frothing device 15 for providing the fine-bubble froth layer 4 for the beverage 2.

In operation, water from the water container 6 is fed to the pump 7 to inject the water under pressure via the valve system 8 into the heating device 9. The pressure from the pump for the liquid is in the range of 1.2-3 bar, preferably 1.4 - 2.5 bar. In the heating device 9, water is heated till it has a temperature just below the boiling point. Expansion water during heating is guided through the valve system 8 back into the water container 6. Subsequently, the heated and pressurized water is provided via the inlet 5 into the brew chamber 10 where it passes through the container 11 to obtain a brewed beverage. After the brewed beverage is output from the container 11, it passes the frothing device 15 that adds the fine-bubble froth layer 4 to the beverage 2 in the cup 3.

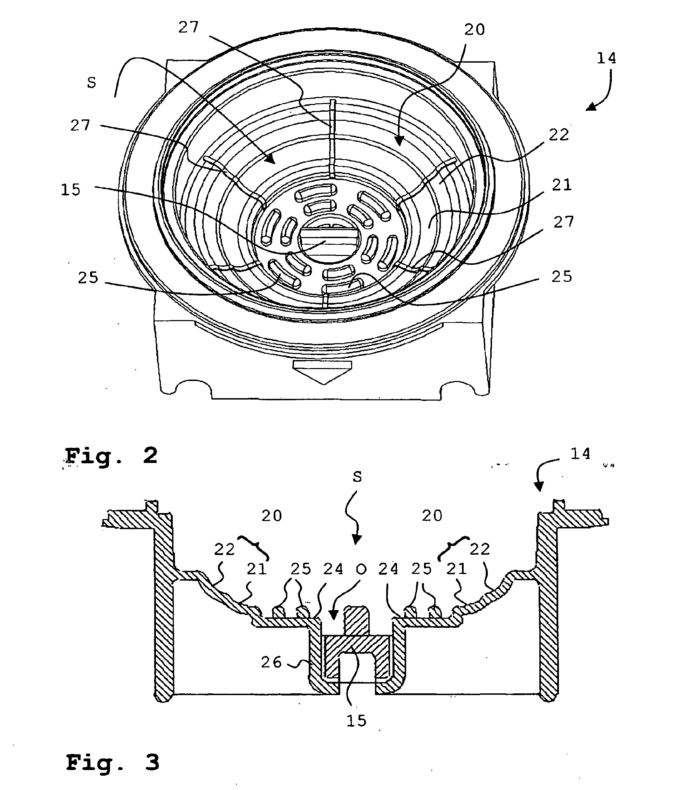

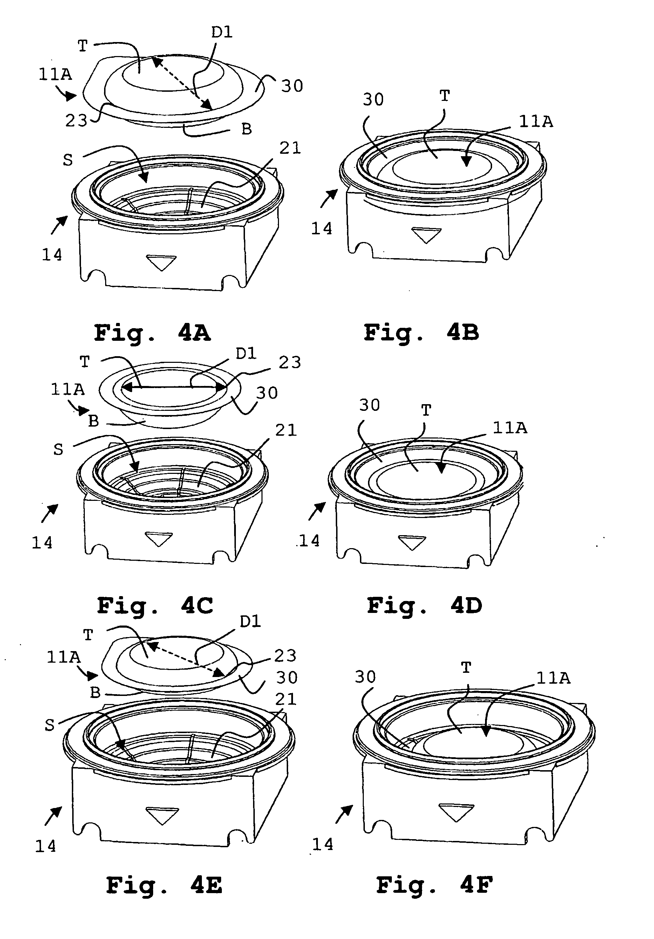

Figs. 2 and 3 depict a holder 14 in perspective view and in cross-section according to an embodiment of the invention. The holder 14 has an inner space S for accommodating the container 11 as will be further illustrated with reference to Figs. 4A-4J. The inner space S has a non-planar surface 20 with a first holding structure 21 and a second holding structure 22 that are respectively arranged to hold containers 11A of a first dimension D1 and containers 11B of a second dimension D2 substantially along an edge 23 of said containers, as illustrated in Figs. 4A-4J. The non-planar surface 20 has levels, terraces, steps or other type of holding structures that are arranged to support containers 11 of at least two different dimensions D1, D2. As the holder 14 forms a bowl, the first and second holding structures are circular structures in the form of annular rings, one surrounding the other with a first diameter approximately equal to D1 and a second diameter approximately equal to D2. It should be appreciated that the holding structures are not necessarily provided around the full circumference of the inner space S, although an all-around presence of the holding structures 20, 21 contributes to the performance of the holder in terms of bypass of water and stability of the container 11. The outer diameter of the inner space S is just smaller than the largest diameter of the container 11 envisaged to be applied.

The holder 14 has a flat circular central surface 24 at the bottom of the inner space S with an opening O for passing the brewed substance. The central surface is provided with spacer structures or projections 25 extending from the surface 24 and defining the extraction area for the brewed substance. The spacer structures 25 prevent the bottom of the container 11 to abut against a flat closed surface 24 which otherwise would result in a serious barrier for the brewed substance in leaving the container 11. The spacer structures 25 provide for an appropriate distance between the flat surface 24 and the lower filter of the container 11. The spacer structures 25 may have a height of e.g. 2 millimetre. The diameter of the circular central surface is smaller than the diameter smallest container 11 to be used with the holder 14.

For containers 11B with large dimensions D2, the second holding structure 22 holds the edge 23, while the bottom filter B rests in the centre on the spacer structures 25. To prevent rupture of the container 11B, there exists a smooth transition between the structures on the non-planar surface 20.

The spacer structures 25 are arranged in a tangential direction on the circularly shaped surface 24. It is noted that sufficient distance between the spacer structures 25 to allow the brewed substance on the surface 24 to flow towards the opening O.

In the embodiment shown in Figs. 2 and 3, the surface 24 has a submerged portion 26 at the opening O for accommodating the frothing device 15.

The non-planar surface 20 comprises ribs 27 defined in a direction, here a radial direction, between the first holding structure 21 and the second holding structure 22 of said non-planar surface 20. The ribs 27 prevent vacuum suction when removing the container 11 after operation of the apparatus 1. It should be appreciated that the height of these ribs 27 should preferably be limited, e.g. less than 0.2 millimetre, to prevent bypass of water.

Figs. 4A-4J show various combinations of holders 14 and containers 11. The containers 11 each have an top filter T and a bottom filter B that are attached to each other at a seam 30 to contain a product, such a ground coffee, for the beverage. Typical container dimensions vary between 44 and 62 mm in diameter, not including the width of the seam 30 and 5-50 mm in thickness d.

Figs. 4A and 4B show a large container 11 with a diameter D2 of 55 mm and a thickness d of 15 mm before and after insertion in a holder 14 . The edge 23 of the container 11 is held by the annular holding structure 22.

Figs. 4C and 4D show a large asymmetric container 11 with a diameter D2 of 50 mm and a thickness d of 13 mm before and after insertion in a holder 14 . The edge 23 of the container 11 is held by the annular holding structure 22.

Figs. 4E and 4F show a small container 11 with a diameter D1 of 44 mm and a thickness d of 10 mm before and after insertion in a holder 14 . The edge 23 of the container 11 is held by the annular holding structure 21.

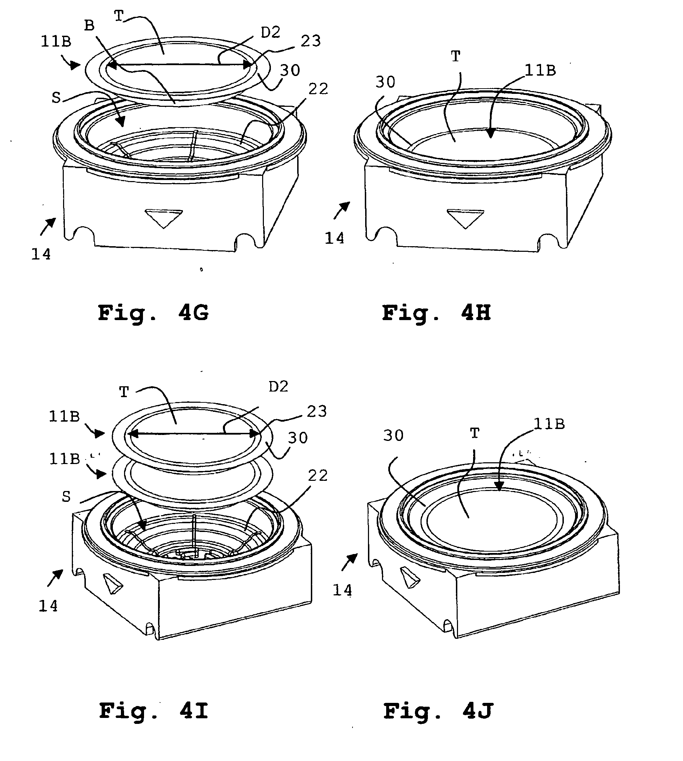

Figs. 4G and 4H show a large, asymmetric, container 11 with a diameter D2 of 62 mm and a thickness *d* of 6 mm before and after insertion in a holder 14 . The edge 23 of the container 11 is held by the annular holding structure 22.

Finally, in Figs. 4I and 4J, the situation is shown of two containers 11 as specified for Figs. 4G and 4H inserted in a single holder 14. The depth of the inner space S of the holder 14 should be sufficient to fit at least one container 11 of the largest thickness d or two containers 11 of the smallest thickness d.

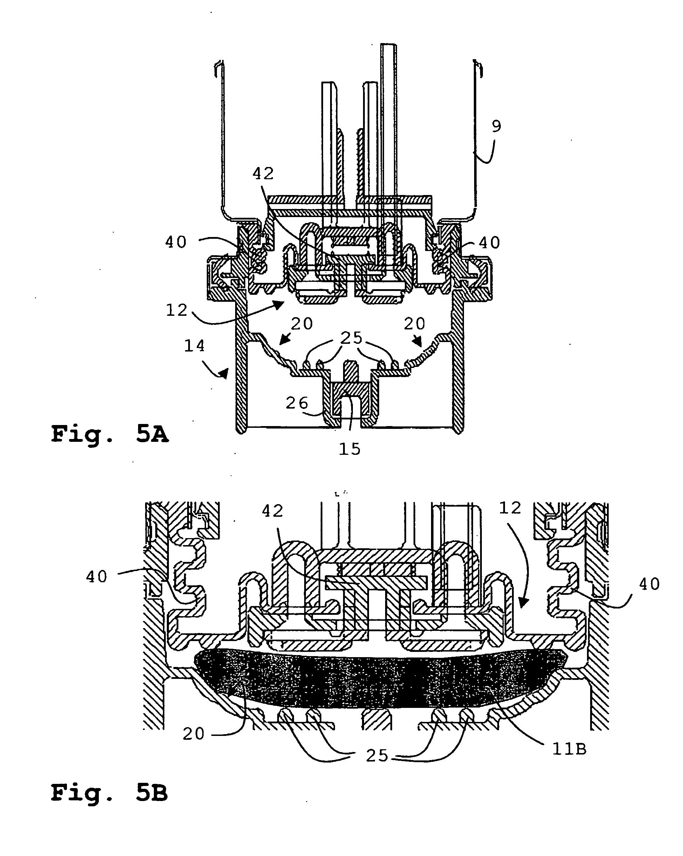

Fig. 5A shows a cross-section of a portion of the apparatus 1 comprising the heating device 9, the cover member 12 and the holder 14. Fig. 5B shows a detailed portion of Fig. 5A in an active state enclosing a container 11.

The cover member 12 comprises a flexible portion 40 and a more stiff portion with a valve system 42. The flexible cover member 12 is subject of a co-pending patent application ("Apparatus for brewing a beverage) of the applicants filed on the same date is incorporated herewith by reference with respect to the structure and operation of the flexible cover member 12 and the valve system 42. The cover member 12 may move downwards to encapsulate a container 11 of a particular dimension D2 by overpressure in the boiler 9. Accordingly, containers of any dimension may be pressed firmly into the holder 14 while held by the holding structure 22, as e.g. shown in Fig. 5B.

In operation, a pill-shaped container 11B is inserted into the container 14 as shown in Fig. 5B. The container 11B of dimension D2 is supported by the second holding structure 22 of the non-planar surface 20 and slightly bends to rest on the spacer structures 25. The holding structure 22 guides the container 11B to a central position in the holder 14. The holder is subsequently translated towards the boiler 9 as described in a co-pending application ("Apparatus for preparing a beverage") of the applicants that is incorporated in the present application by reference with respect to the translation mechanism and operation of the holder 14. Then, the apparatus 1 is activated such that the pressure in the boiler 9 increases. The pressure increase results in the flexible closure member to move towards the centered container 11B in the holder 14 such that the container 11B is fully encapsulated by the holder 14 and the flexible closure member 12, pressing the container 11 downwards, in the brewing chamber 10. When the valve system contacts the container 11B, the valve is opened and water from the boiler 9 is forced through the container 11B to obtain the beverage in the cup 3. A froth layer 4 is obtained when the frothing device 15 in the submerged portion 26 is applied.

The gist of the invention relates to providing a holder 14 that allows to hold a plurality of containers 11 of different dimensions while maintaining appropriate extraction characteristics. The appropriate support for the containers 11 is obtained by providing a holder with an adapted profile that is tailored to the dimensions of the envisaged containers 11. The adapted profile may comprise a plurality of circular rims of different diameters.

## Claims

1. An apparatus (1) for preparing a beverage comprising a cover member (12) and a holder (14) defining an inner space (S) for accommodating at least one container (11) with a soluble or extractable product to obtain said beverage, wherein said inner space has a non-planar surface (20) defining at least a first holding structure (21) and a second holding structure (22), respectively arranged to hold containers (11A;11B) of at least a first dimension (D1) and a second dimension (D2), as defined by an edge (23) of said containers, substantially along said edge of said containers
**characterised in that**
said cover member (12) is a flexible cover member capable of pressing said at least one container against respectively said first or said second holding structure to adapt said inner space to said at least one container.

2. The apparatus (1) according to claim 1, wherein said first holding structure (21) and said.second holding structure. (22) are circular structures of a first diameter (D1) and a second diameter (D2), wherein said first diameter is smaller than said second diameter.

3. The apparatus (1) according to claim 1, wherein said first diameter is in the range of 44-52 millimetre and said second diameter is in the range of 55-65 millimetre.

4. The apparatus (1) according to one or more of the preceding claims, wherein said inner space (S) comprises a central surface (24) with an opening (O) for passing said beverage and wherein said surface is provided with spacer structures (25) projecting from said central surface.

5. The apparatus (1) according to claim 4, wherein said surface (24) has a circular shape and said spacer structures (25) are arranged on said circularly shaped surface in a tangential direction.

6. The apparatus (1) according to claim 4 or 5, wherein said surface comprises a submerged portion (26) at said opening accommodating a frothing device (15).

7. The apparatus (1) according to one or more of the preceding claims, wherein said non-planar surface (20) comprises one or more ribs (27) defined in a direction between said first holding structure (21) and second holding structure (22) on said non-planar surface.

8. The apparatus (1) according to claim 7, wherein said inner space (S) has a circular shape and said ribs (27) are defined in a radial direction on said non-planar surface.

9. The apparatus (1) according to claim 1, wherein said flexible closure member (12) comprises a valve system (42) for entry of water to said container (11).

## Patentansprüche

1. Vorrichtung (1) zum Zubereiten eines Getränkes, aufweisend ein Abdeckelement (12) und einen Halter (14), der einen Innenraum (S) zum Aufnehmen wenigstens eines Behälters (11) mit einem löslichen oder extrahierbaren Produkt definiert, um das Getränk zu erlangen, wobei der Innenraum eine nicht planare Fläche (20) aufweist, die wenigstens eine erste Haltestruktur (21) und eine zweite Haltestruktur (22) definiert, die jeweils angeordnet sind, um Behälter (11A; 11B) von wenigstens einer ersten Größe (D1) und einer zweiten Größe (D2), wie sie durch einen Rand (23) der Behälter definiert sind, im Wesentlichen entlang des Randes der Behälter zu halten, **dadurch gekennzeichnet, dass** das Abdeckelement (12) ein flexibles Abdeckelement ist, das geeignet ist, den wenigstens einen Behälter jeweils gegen die erste oder die zweite Haltestruktur zu drücken, um den Innenraum an den wenigstens einen Behälter anzupassen.

2. Vorrichtung (1) nach Anspruch 1, wobei die erste Haltestruktur (21) und die zweite Haltestruktur (22) kreisförmige Strukturen mit einem ersten Durchmesser (D1) und einem zweiten Durchmesser (D2) sind, wobei der erste Durchmesser kleiner als der zweite Durchmesser ist.

3. Vorrichtung (1) nach Anspruch 1, wobei der erste Durchmesser in dem Bereich von 44-52 Millimetern ist und der zweite Durchmesser in dem Bereich von 55-65 Millimetern ist.

4. Vorrichtung (1) nach einem oder mehreren der vorhergehenden Ansprüche, wobei der Innenraum (S) eine zentrale Fläche (24) mit einer Öffnung (O) zum Passieren des Getränkes aufweist, und wobei die Fläche mit Abstandshalterstrukturen (25) versehen ist, die von der zentralen Fläche vorstehen.

5. Vorrichtung (1) nach Anspruch 4, wobei die Fläche (24) eine Kreisform hat und die Abstandshalterstrukturen (25) an der kreisförmigen Fläche in einer Tangentialrichtung angeordnet sind.

6. Vorrichtung (1) nach Anspruch 4 oder 5, wobei die Fläche in der Öffnung einen abgesenkten Abschnitt (26) aufweist, der eine Schaumbildungsvorrichtung (15) aufnimmt.

7. Vorrichtung (1) nach einem oder mehreren der vorhergehenden Ansprüche, wobei die nicht planare Fläche (20) eine oder mehrere Rippen (27) aufweist, die in einer Richtung zwischen der ersten Haltestruktur (21) und der zweiten Haltestruktur (22) an der nicht planaren Fläche definiert sind.

8. Vorrichtung (1) nach Anspruch 7, wobei der Innenraum (S) eine Kreisform hat und die Rippen (27) in einer Radialrichtung an der nicht planaren Fläche definiert sind.

9. Vorrichtung (1) nach Anspruch 1, wobei das flexible Abdeckelement (12) ein Ventilsystem (42) für den Eintritt von Wasser in den Behälter (11) aufweist.

## Revendications

1. Appareil (1) pour préparer une boisson comprenant un élément de couvercle (12) et un support (14) définissant un espace interne (S) pour loger au moins un récipient (11) avec un produit soluble ou extractible afin d'obtenir ladite boisson, dans lequel ledit espace interne a une surface non plane (20) définissant au moins une première structure de support (21) et une seconde structure de support (22) respectivement agencées pour supporter les récipients (11A ; 11B) d'au moins une première dimension (D1) et d'une seconde dimension (D2), telle que définie par un bord (23) desdits récipients, sensiblement le long dudit bord desdits récipients,
**caractérisé en ce que** :
ledit élément de couvercle (12) est un élément de couvercle flexible capable de comprimer ledit au moins un récipient respectivement contre ladite première ou ladite seconde structure de support pour adapter ledit espace interne audit au moins un récipient.

2. Appareil (1) selon la revendication 1, dans lequel ladite première structure de support (21) et ladite seconde structure de support (22) sont des structures circulaires d'un premier diamètre (D1) et d'un second diamètre (D2), dans lequel ledit premier diamètre est inférieur audit second diamètre.

3. Appareil (1) selon la revendication 1, dans lequel ledit premier diamètre est de l'ordre de 44 - 52 millimètres et ledit second diamètre est de l'ordre de 55 - 65 millimètres.

4. Appareil (1) selon une ou plusieurs des revendications précédentes, dans lequel ledit espace interne (S) comprend une surface centrale (24) avec une ouverture (O) pour faire passer ladite boisson et dans lequel ladite surface est dotée de structures d'espacement (25) faisant saillie de ladite surface centrale.

5. Appareil (1) selon la revendication 4, dans lequel ladite surface (24) a une forme circulaire et lesdites structures d'espacement (25) sont agencées sur ladite surface de forme circulaire dans une direction tangentielle.

6. Appareil (1) selon la revendication 4 ou 5, dans lequel ladite surface comprend une partie immergée (26) au niveau de ladite ouverture logeant un dispositif de moussage (15).

7. Appareil (1) selon une ou plusieurs des revendications précédentes, dans lequel ladite surface non plane (20) comprend une ou plusieurs nervures (27) définies dans une direction entre, ladite première structure de support (21) et ladite seconde structure de support (22) sur ladite surface non plane.

8. Appareil (1) selon la revendication 7, dans lequel ledit espace interne (S) a une forme circulaire et lesdites nervures (27) sont définies dans une direction radiale sur ladite surface non plane.

9. Appareil (1) selon la revendication 1, dans lequel ledit élément de fermeture flexible (12) comprend un système de soupape (42) pour faire entrer de l'eau dans ledit récipient (11).
